# EUROPEAN PATENT SPECIFICATION

(11) **EP 4 164 016 B1**
(45) Date of publication and mention of the grant of the patent: **11.06.2025**
(21) Application number: 22788493.9
(22) Date of filing: 15.04.2022
(51) Int. Cl.: H01M 10/04, H01M 50/256, B65H 19/10, B65H 16/02, B65H 20/16, B65H 23/26, H01M 4/04

(54) **ROLL-TYPE RAW MATERIAL SUPPLY DEVICE**
ROLLENARTIGE ROHMATERIALZUFÜHRVORRICHTUNG
DISPOSITIF D'ALIMENTATION EN MATIÈRE PREMIÈRE DE TYPE ROULEAU

(30) Priority: 15.04.2021 KR 20210048933; 13.01.2022 KR 20220005009
(43) Date of publication of application: 12.04.2023
(73) Proprietor: LG Energy Solution, Ltd., Seoul 07335 (KR)
(72) Inventor: CHOI, Dongsoon, Daejeon 34122 (KR); LEE, Sang Don, Daejeon 34122 (KR); KIM, Woong Ki, Daejeon 34122 (KR); HAN, Doseong, Daejeon 34122 (KR); LEE, Won Jong, Ansan-si, Gyeonggi-do 15523 (KR); JUNG, Yook Il, Ansan-si, Gyeonggi-do 15523 (KR); KWON, Young Mo, Ansan-si, Gyeonggi-do 15523 (KR)
(74) Representative: Goddar, Heinz J.
(86) International application number: PCT/KR2022/005455
(87) International publication number: WO 2022/220638

(56) References cited:
- JP-A- 2009 004 218
- JP-U- H0 556 856
- KR-A- 20180 068 788
- KR-A- 20210 029 448
- KR-B1- 101 832 936
- KR-B1- 101 892 583
- US-A- 4 840 320

## Description

### [Technical Field]

The present invention relates to a roll type raw material supply device. [Background Art]

A secondary battery is a chemical battery that can be used semi-permanently by continuously repeating charging and discharge using an electrochemical reaction, which is classified into a lead-acid battery, a nickel-cadmium battery, a nickel-hydrogen battery, and a lithium secondary battery. Among them, a lithium secondary battery has superior voltage and energy density characteristics compared to other batteries, thereby leading the market for secondary batteries, which is divided into a lithium-ion secondary battery using a liquid electrolyte and a lithium-ion polymer secondary battery using a solid electrolyte, according to the type of electrolyte. This lithium secondary battery is composed of a positive electrode, a negative electrode and an electrolyte, and also the separator is generally positioned between the positive electrode and the negative electrode to prevent a short circuit between the positive electrode and the negative electrode due to their direct contact.

In this separator, various resins comprising a polyolefin-based polymer resins such as polyethylene and polypropylene are used as raw materials, and the raw material is mainly supplied in the form of a roll. When supplying a new raw material due to the exhaustion of the raw material in use, in general, the raw material is continuously supplied by bonding the end portion of the raw material in use and the end portion of the new raw material. An automated bonding device that bonds the raw material in use and the new raw material is already known as a related art as in Patent Document 1 below. However, supplied raw material in the form of a roll is initially supplied by attaching a tape to an end portion so as to prevent the roll from unwinding, and there is inconvenience that the tape is manually removed and a part of the roll should be released and inserted into a raw material supply location of the automated bonding device in order to apply the supplied raw material in the form of a roll to the automated bonding device. Further, when the roll is released by the manual work, it is difficult to maintain a tension in the supplied raw material in the form of a roll as it is, and thus a quality of the raw material of the corresponding portion deteriorates.

Therefore, the present inventor studies the roll type raw material supply device capable of automating even a process of removing the tape in the supplied raw material in the form of a roll and supplying the supplied raw material in the form of a roll, corresponding to the automated bonding device, and has completed the present invention in order to solve the above-described problem.

### [Prior Art Document]

### [Patent Document]

(Patent Document 1) Korean Laid-open Patent Publication No. 10-2016-0133264
JP H 0556856 U discloses a peeling device wherein a first adhesive layer to be adhered to a web terminal part and a second adhesive layer to be adhered to a surface of a paper roll are provided on the rear surface of a mount, the terminal part of the rolled paper is temporarily fixed by sticking a tab having an adhesive layer for paper slicing formed on the surface of the mount, an ear part extending outward from one side of the outer periphery of the adhesive layer is provided on the separator for protecting the adhesive layer for paper slicing.

US 4,840,320 A discloses an apparatus for automatically threading the leading end of web spooled on the reel into one end of the conveying passage including a draw-out lever having a web support surface and movable to a first position at which the support surface engages the web spooled on the reel. A nipping finger is provided which is actuatable to trap the leading end of the web against surface when the lever is in its first position. The lever is movable to a second position at which the support surface is spaced from the web spooled on the reel for unspooling the web from the reel. A feed mechanism is made effective after the lever is moved to a second position, and after the nipping finger has been deactuated, for engaging the unspooled web and feeding the leading end thereof into the conveying passage.

### [Disclosure]

### [Technical Problem]

In order to solve the above problems, it is an object of the present invention to provide a roll type raw material supply device capable of automatically removing a tape attached to a raw material in the form of a roll and moving so as to supply the end portion of the raw material to a subsequent device.

### [Technical Solution]

The present invention provides a roll type raw material supply device including: a raw material mounting unit 10 for introducing a roll type raw material R to which a tape T for fixation to an end portion of a raw material is attached; a tape removal unit 20 clamping a non-bonding portion B of the tape and separating the tape from the raw material; and a raw material conveying unit 30 attaching and moving the raw material.

In one embodiment of the present invention, the raw material mounting unit 10 includes a support 11 and a first roller 12, wherein the support supports the first roller, and the first roller fixes and rotates the roll type raw material R.

In one embodiment of the present invention, the tape removal unit 20 includes a clamp member 21 and a first conveying cylinder 22, wherein the clamp member includes a first clamp member 21A and a second clamp member 21B, and the first clamp member is positioned at an outer side than the second clamp member to be in contact with the raw material R and the tape T when driving the device, and when the first clamp member and the second clamp member are spaced apart from each other and then the nonbonding portion B of the tape is positioned between the first clamp member and the second clamp member, the first clamp member and the second clamp member are close to each other to clamp the non-bonding portion of the tape, and the first conveying cylinder moves the clamp member.

In one embodiment of the present invention, the raw material conveying unit 30 includes an attachment pad 31 and a second conveying cylinder 32, wherein the attachment pad attaches and fixes the end portion of the raw material, and the second conveying cylinder moves the attachment pad.

In one embodiment of the present invention, the non-bonding portion B of the tape T attached to the roll type raw material R has a different color from the raw material and is coated with a film F having greater rigidity than the tape, and the first clamp member 21A includes a color sensor 21S for identifying the film.

In one embodiment of the present invention, the first clamp member 21A includes an air eruption hole H2 for erupting air to separate the non-bonding portion B of the tape T from the roll type raw material R.

In one embodiment of the present invention, a portion in the tape that is coated with the film has one or more holes H1 through which air can pass.

In one embodiment of the present invention, the attachment pad 31 has a shape in which an attachment surface is in contact with a corner of the end portion of the raw material and is not in contact with the tape when attaching and fixing the end portion of the raw material.

In one embodiment of the present invention, the raw material conveying unit 30 further includes a supplementary member 33 for supplementing the attachment pad 31 so that the attachment surface is in contact with the entire area of the end portion of the raw material after the tape is removed.

In one embodiment of the present invention, the raw material conveying unit 30 further includes a support member 34 for supporting the other surface of the attachment surface when unwinding the roll type raw material after attaching the raw material.

In one embodiment of the present invention, the roll type raw material supply device further includes one or more second rollers 41 for adjusting a tension of the raw material and determining a movement path of the raw material.

### [Advantageous Effects]

The roll type raw material supply device according to the present invention can automatically and effectively remove the tape attached to a roll type raw material, and can cause the end portion of the raw material to move to a desired location without damage such as warping.

### [Description of Drawings]

FIG. 1 is a view schematically showing the roll type raw material supply device according to an embodiment of the present invention.
FIGs. 2a, 2b, 2c, 2d, 2e, and 2f are views sequentially showing a process in which a roll type raw material supply device is driven according to an embodiment of the present invention.
FIGs. 3a and 3b are views showing a tape in which a non-bonding portion is coated with a film according to an embodiment of the present invention. FIG. 3a is a perspective view and FIG. 3b is a plan view.
FIG. 4 is a view showing a clamp member including a color sensor according to an embodiment of the present invention.
FIG. 5 is a view showing a clamp member including an air eruption hole according to an embodiment of the present invention.
FIG. 6a is a plan view showing a state in which the clamp member and an attachment pad are in contact with a roll type raw material just before removing a tape according to an embodiment of the present invention. FIG. 6b is a perspective view showing a state in which a first clamp member is in contact with a raw material before clamping a non-bonding portion of the tape according to an embodiment of the present invention.
FIGs. 7a and 7b are views showing a raw material conveying unit including a supplementary member according to an embodiment of the present invention.
FIG. 8 is a view showing a raw material conveying unit including a support member according to an embodiment of the present invention.

### [Best Mode]

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

In the drawings, the size of each component or a specific part constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present invention, such description will be omitted.

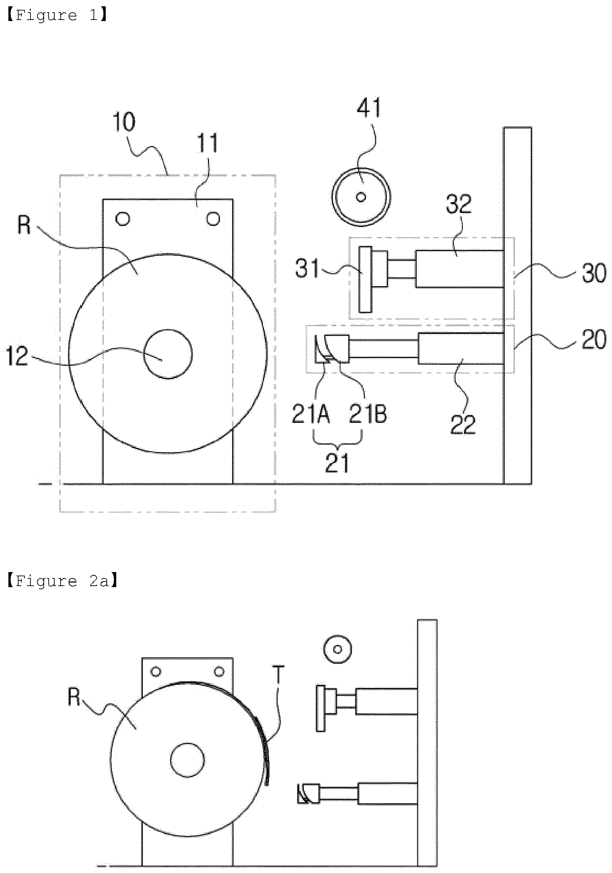

The present invention relates to a roll type raw material supply device, and in order to describe such a device, FIG. 1 provides a view schematically showing a roll type raw material supply device according to an embodiment of the present invention.

The roll type raw material supply device according to an embodiment of the present invention may include a raw material mounting unit 10, a tape removal unit 20, and a raw material conveying unit 30, and may include additional components as necessary.

The raw material mounting unit 10 is a device for introducing a roll type raw material R, and a tape (not shown in FIG. 1) for fixing to the end portion of the raw material is attached to the roll type raw material so as to prevent the roll from unwinding. Here, the "end portion" means the area from a start line (or end line) in the direction (when applied to a device, a machine direction (MD)) of a raw material R, to a line spaced apart by a certain distance and the certain distance is determined by the line in the width direction (when applied to the device, a transverse direction (TD)), where the attachment pad 31 and the raw material R are in contact with each other. The width of the tape is sufficient as long as the roll does not unwind, and may be much shorter than the width of the raw material. One tape is attached to a portion around a center of the width of the raw material. The raw material mounting unit 10 includes a support 11 and a first roller 12, and may include additional components as necessary. The support 11 is a device for supporting a first roller 12 so that the roll type raw material R may be introduced into the first roller. The first roller 12 is a device for fixing and rotating the roll type raw material R.

The raw material R may be supplied while one or more layers of fabrics are rolled in a roll type. When the raw material R is formed of two or more layers of fabrics, the fabric may be a state in which respective layers are attached by an electrostatic attraction. When conveying the raw material R formed of two or more layers of fabrics, it is advantageous to apply in subsequent processes only when the raw material R is conveyed in a state in which each layer is not separated from each other.

The tape removal unit 20 is a device for clamping the non-bonding portion of the tape and separating the tape from the raw material. The tape removal unit 20 may include a clamp member 21 and a first conveying cylinder 22, and may include additional components as necessary. The clamp member 21 is a device for clamping the non-bonding portion of the tape. The clamp member 21 includes a first clamp member 21A and a second clamp member 21B, wherein the first clamp member 21A is positioned at the outer side than the second clamp member 21B, and is in contact with the raw material R and the tape when driving the device. When the first clamp member 21A and the second clamp member 21B are spaced apart from each other and then the non-bonding portion of the tape is positioned between the first clamp member 21A and the second clamp member 21B, the first clamp member 21A and the second clamp member 21B are in contact with each other to clamp the non-bonding portion of the tape. The first conveying cylinder 22 is a device for moving the clamp member 21. The first conveying cylinder 22 may achieve the purpose of removing the tape only by causing the clamp member 21 to contact the roll type raw material R and move in a direction away from the roll type raw material (a left-right direction in FIG. 1), but it also causes the clamp member 21 to move in a direction perpendicular thereto (an up-down direction in FIG. 1) if necessary.

The raw material conveying unit 30 is a device for attaching and moving the raw material. The raw material conveying unit 30 includes an attachment pad 31 and a second conveying cylinder 32. The attachment pad 31 is a device for attaching and fixing the end portion of the raw material. The attachment pad 31 attaches and fixes the end portion of the raw material, thereby effectively removing only the tape in a state in which the clamp member 21 fixes the end portion of the raw material, and supplying the raw material to a desired location by causing the attachment pad 31 to move to unwind the roll. The attachment pad 31 may attach the raw material through adsorption or electrostatic force. When the raw material R is formed of two or more layers of fabrics, the attachment pad 31 may fix the raw material R in a state in which each layer of the fabrics is attached using electrostatic force, thereby conveying the raw material R in a state in which each layer is not separated from each other. An electrostatic chuck may be used in order to apply the electrostatic force, and if the raw material R may be fixed in a state in which each layer of the fabrics is attached, the type of electrostatic chuck is not particularly limited. According to one embodiment of the present invention, the electrostatic chuck includes a polyimide substrate and a bipolar type electrode, and is driven by applying a voltage of 1.0 kV to 5.0 kV, specifically 1.5 kV to 4.0 kV, and more specifically 2.0 kV to 3.0 kV. Two or more layers of fabrics may be efficiently fixed within the above range.

The second conveying cylinder 32 is a device for moving the attachment pad 31. The second conveying cylinder 32 causes the attachment pad 31 to be in contact with the roll type raw material R and move in a direction away from the roll type raw material R (the left-right direction in FIG. 1), and also causes the attachment pad 31 to move in a direction perpendicular thereto (the up-down direction in FIG. 1) in order to supply the raw material to a desired location. As the second conveying cylinder 32, a 2-axis direction orthogonal robot, which is movable in both an X direction (the left-right direction in FIG. 1) and a Z direction (the up-down direction in FIG. 1) except for a Y direction (a front-rear direction in FIG. 1), may be used, and when the 2-axis orthogonal robot moves in the Y direction, a warping phenomenon of the raw material may occur.

The roll type raw material supply device according to an embodiment of the present invention further includes one or more second rollers 41. The second rollers 41 are a device for adjusting the tension of the raw material and deciding a movement path of the raw material. In the roll type raw material supply device, the second rollers 41 are disposed in the middle of the movement path of the raw material, thereby preventing a phenomenon in which the tension of the raw material is decreased at a specific portion according to a supply speed of the raw material. The tension of the raw material may be controlled by installing a load cell in the second roller 41, and the warping phenomenon or a break phenomenon of the raw material may be prevented by controlling the tension of the raw material.

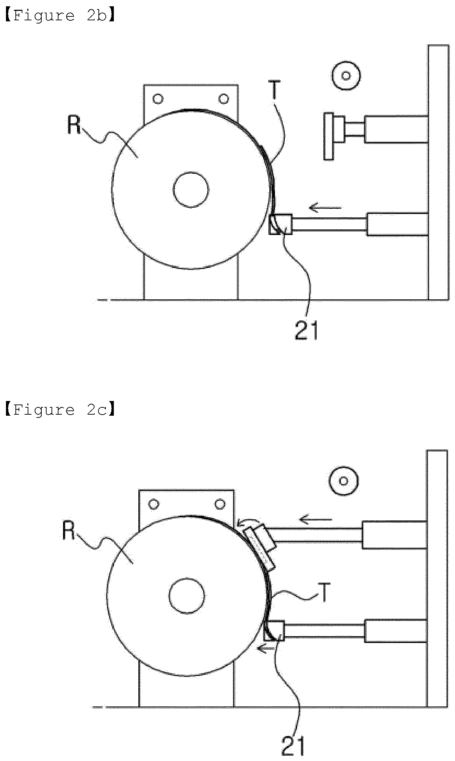

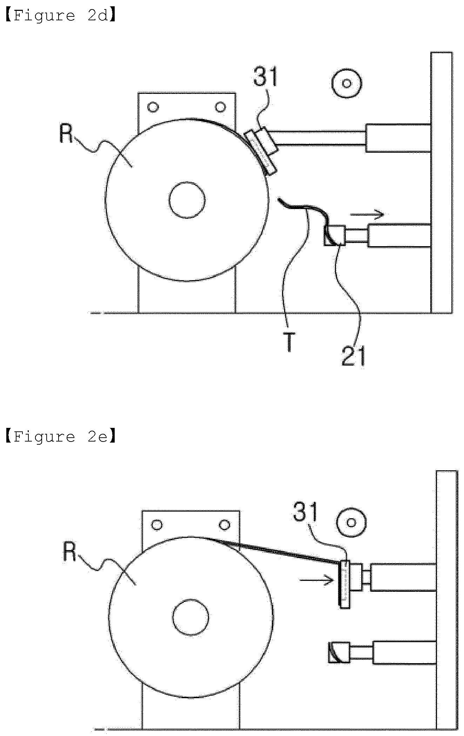

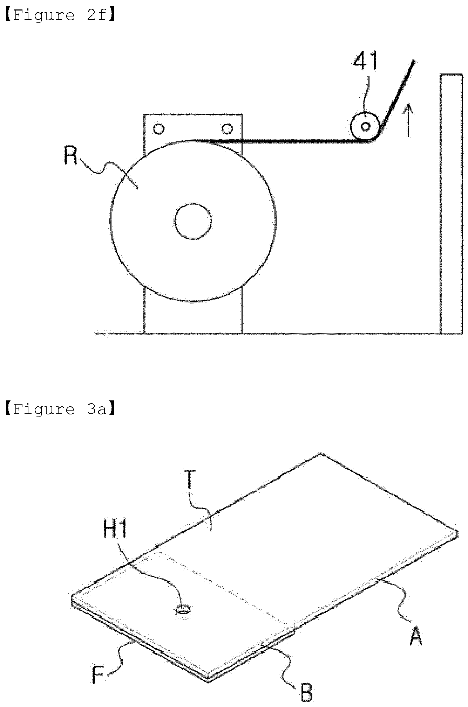

In order to specifically describe a process of separating a tape from a roll type raw material and causing the end portion of the raw material to move to a location required for a subsequent step, FIG. 2 provides a view showing a process in which a roll type raw material supply device is driven sequentially according to an embodiment of the present invention.

As shown in FIG. 2a, the clamp member 21 of the tape removal unit 20 moves to a vicinity of the roll type raw material R to identify a location of a tape T from the roll type raw material R which rotates in a counterclockwise direction. Thereafter, as shown in FIG. 2b, when the location of the tape T is identified, the location of the roll is adjusted so that the clamp member 21 may be positioned just below the non-bonding portion of the tape, and then the clamp member 21 is in contact with the roll type raw material R. Thereafter, as shown in FIG. 2c, the roll type raw material is rotated in a clockwise direction so that the non-bonding portion of the tape is positioned between the first clamp member 21A and the second clamp member 21B of the clamp member 21, and when the non-bonding portion of the tape is positioned between the first clamp member 21A and the second clamp member 21B of the clamp member 21, the second clamp member 21B is moved close to the first clamp member 21A so that the clamp member 21 clamps the non-bonding portion of the tape. Further, the attachment pad 31 moves to the end portion of the raw material to attach and fix the end portion of the raw material. In this case, since the attachment pad 31 is not in contact with the tape, the attachment pad 31 does not interfere with removal of the tape. As shown in FIG. 2d, the clamp member 21 is spaced apart from the roll type raw material to remove the tape T. Thereafter, as shown in FIG. 2e, the attachment pad 31 is spaced apart from the roll type raw material R to unwind the roll and move the end portion of the raw material. Thereafter, as shown in FIG. 2f, when the second roller 41 is present, the attachment pad 31 is moved so that the raw material moves in contact with the second roller 41.

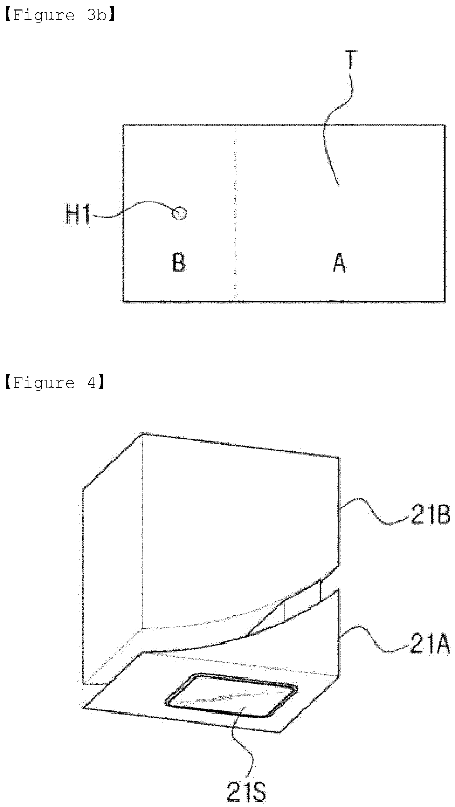

In order to increase the efficiency of removing the tape, the tape coated with the film may be used. FIGs. 3a and 3b provide views showing a tape in which a non-bonding portion is coated with a film according to an embodiment of the present invention. FIG. 3a is a perspective view showing a state in which the tape is viewed obliquely and FIG. 3b is a plan view showing a state in which the tape is viewed from the top.

Since a generally used tape is transparent, even though the tape is attached to the roll type raw material, the roll type raw material shows the same color as the raw material in appearance even at a location to which the tape is attached, equally at a location to which the tape is not attached. Therefore, the location of the tape may not be easily distinguished visually. If the tape is coated with a film F having a different color from the raw material, the location of the tape may be easily distinguished visually. In an automated device, the film F having the different color is identified by a sensor such as color sensor. As shown in FIGs. 3a and 3b, the tape T is separated into a bonding portion A and a non-bonding portion B. The non-bonding portion B of the tape T is a portion where there is no bonding force on the surface that is in contact with the raw material, and when the tape T has the non-bonding portion B, the clamp member 21 of the device may easily clamp the tape T. The non-bonding portion B of the tape T is coated with the film F. A lower portion of the non-bonding portion B facing the raw material may also be coated with the film, and an upper portion of the non-bonding portion B, which is an opposite surface thereto, may be coated with the film, and the upper and lower portions of the non-bonding portion B may be coated with the film. Since a transparent tape or a translucent tape is used, there is no problem in identifying the film by the sensor even though the lower portion of the non-bonding portion B is coated with the film, and since a material of the film F may be rather lower in electrostatic attraction with the raw material R than the material of the tape T, it may be more advantageous in separating the non-bonding portion B of the tape from the roll type raw material R. When only the non-bonding portion B is coated with the film F by distinguishing the bonding portion A and the non-bonding portion B, it is easy for the sensor of the device to recognize the size of the non-bonding portion B and decide a location for the clamp member 21 to clamp the tape T. As the film F, a material having larger rigidity than the tape T may be used, and for example, a material such as polyethylene terephthalate (PET) may be used. When the material having the large rigidity is used as the film F, the non-bonding portion may be easily raised at once. A thickness of the film may be 10 to 500 µm, and preferably 50 to 200 µm. A portion coated with the film in the tape may have one or more holes H1 through which air may pass. The hole H1 may reduce the phenomenon in which the raw material and the non-bonding portion are in close contact with each other by the electrostatic attraction, and when the non-bonding portion B of the tape T is spaced apart from the roll type raw material R by artificially blowing the wind, the air passes between the holes H1, thereby preventing the non-bonding portion B of the tape T from excessively separating beyond a space between the first clamp member 21A and the second clamp member 21B.

In order to describe the location for the color sensor, FIG. 4 provides a view showing the clamp member including the color sensor according to an embodiment of the present invention.

When the film F having the different color is attached to the non-bonding portion B of the tape T, the clamp member 21 may include a color sensor 21S in order to recognize the location of the film F and adjust the location of the clamp member 21, and the color sensor 21S may be positioned on a surface facing the roll type raw material R of the first clamp member 21A or the tape T in order for the color sensor 21S to be effectively operated. If the film F may be identified with a high sensitivity, the type of color sensor 21S is not particularly limited.

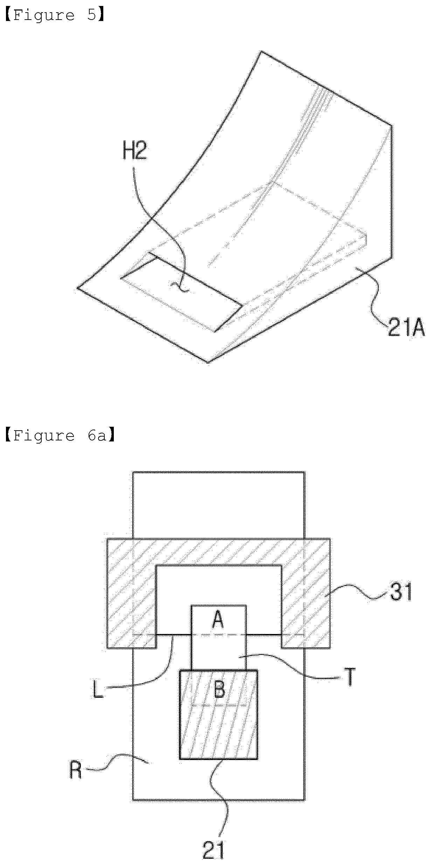

In order to describe the location for the air eruption hole, FIG. 5 provides a view showing the clamp member including the air eruption hole according to an embodiment of the present invention.

In the case of the roll type raw material R and the non-bonding portion B of the tape T, even though the non-bonding portion B has no bonding force, the phenomenon in which the raw material R and the non-bonding portion B are in close contact with each other by the electrostatic attraction may occur, and when artificially blowing the wind to the space between the roll type raw material R and the non-bonding portion B, the non-bonding portion B may be easily spaced apart from the roll type raw material R. The wind may be generated by erupting the air from an air eruption hole H2 positioned in the clamp member. The air eruption hole H2 is connected to a device (not shown) that injects the air. In order to effectively separate the non-bonding portion B, it may be preferable that the air eruption hole H2 is formed to be close to the non-bonding portion B of the tape T in the first clamp member 21A as possible as shown in FIG. 5.

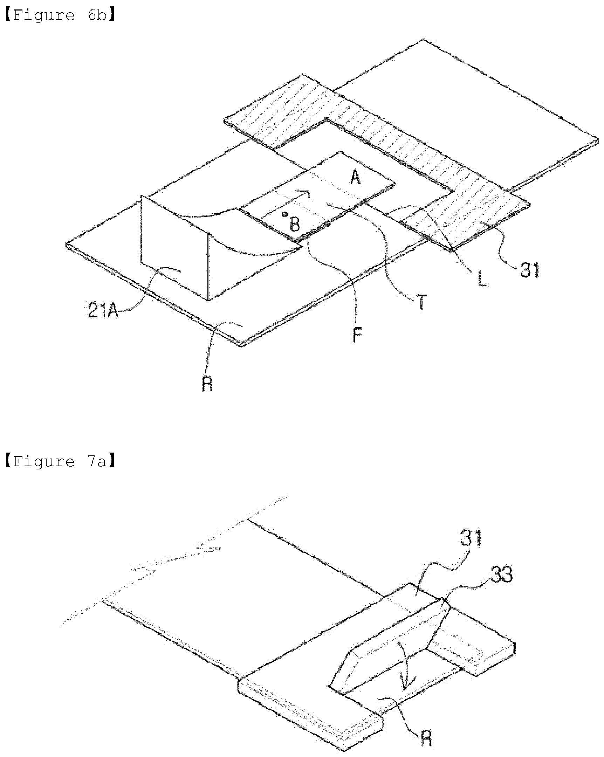

In order to describe a state in which the clamp member and the attachment pad are in contact with the roll type raw material just before removing the tape, FIG. 6a provides a plan view showing a state in which the clamp member and the attachment pad are in contact with the roll type raw material just before removing the tape according to an embodiment of the present invention, and FIG. 6b provides a perspective view showing a state in which the first clamp member is in contact with the raw material before clamping the non-bonding portion of the tape according to an embodiment of the present invention.

In general, one tape T is attached to the vicinity of a width center of the roll type raw material R, and the tape is bonded so that the bonding portion A goes through a start line L of the roll type raw material. In order to remove the tape, first, as shown in FIG. 6b, the first clamp member 21A is in contact with the roll type raw material R in the state of being adjacent to the end of the non-bonding portion of the tape, the first clamp member 21A moves toward the non-bonding portion B of the tape and is placed at a lower end of the first clamp member as shown in FIG. 6a, and the non-bonding portion B of the tape is positioned between the first clamp member and the second clamp member. Just before removing the tape, the first clamp member 21A among the clamp members 21 is in contact with the roll type raw material R in the state in which the clamp member 21 clamps the non-bonding portion B of the tape T, and the attachment pad 31 is in contact with the roll type raw material R in order to clamp the roll type raw material R so that the roll type material R is not unwound. In this case, in order to effectively remove the tape by separating the clamp member 21, it is important that the attachment pad 31 is not in contact with the tape. The shape of the attachment surface of the attachment pad 31 is not particularly limited as long as the roll type raw material R is not unwound and is not in contact with the tape, but covering the periphery of the tape as much as possible can prevent the deformation of the raw material at most by removing the tape. In addition, since the attachment pad 31 serves to prevent the roll type raw material from unwinding when removing the tape and also move the end portion of the raw material, if the attachment pad 31 clamps a corner of the end portion of the raw material, the phenomenon in which the corner is bent while moving may be prevented. In FIG. 6, one exemplary shape of the attachment pad 31 is presented, and in such a shape, the attachment pad 31 is in contact with the corner of the end portion of the raw material and is not in contact with the tape.

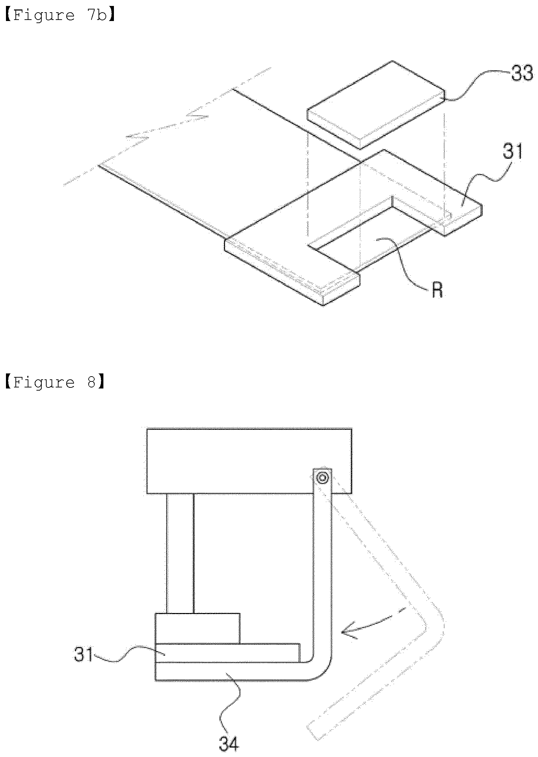

In order to describe the supplementary member, FIGS. 7a and 7b provide view showing the raw material conveying unit including the supplementary member according to an embodiment of the present invention.

Since the attachment pad 31 serves to clamp the raw material so as to prevent the roll type raw material from unwinding when removing the tape, the attachment pad 31 has a shape in which the attachment pad 31 is not in contact with the tape. The attachment pad 31 does not cover the entire area of the end portion of the raw material due to such a shape, and this causes a problem in that when the attachment pad 31 moves the end portion of the raw material, the end portion of the raw material is not sufficiently fixed. The raw material conveying unit 30 may further include a supplementary member 33, and the supplementary member 33 supplements the attachment pad 31 so that the attachment surface is in contact with the entire area of the end portion of the raw material after the tape is removed. Since the area to be supplemented is determined, the shape of the supplementary member 33 is not diversified, but the supplementary member 33 may be applied in various directions. FIGs. 7a and 7b present an exemplary application direction of the supplementary member 33.

In order to describe the support member, FIG. 8 provides a view showing the raw material conveying unit including the support member according to an embodiment of the present invention.

The support member 34 may be introduced to solve a problem in that the support member 34, similarly to the supplementary member 33, does not sufficiently fix the end portion of the raw material when the attachment pad 31 moves the end portion of the raw material, and the supplementary member 33 and the support member 34 may also be simultaneously applied. The raw material conveying unit 30 may further include the support member 34, and the support member 34 supports the other surface of the attachment surface when unwinding the roll type raw material R after attaching the raw material. When the supplementary member 33 and the support member 34 are simultaneously applied, since the supplementary member 33 may be applied before unwinding the roll type raw material R, the supplementary member 33 may be applied earlier than the support member 34. FIG. 8 presents an exemplary shape and an exemplary application direction of the support member 34.

### [Description of Symbol]

10: Raw material mounting unit, 11: Support
12: First roller, 20: Tape removal unit
21: Clamp member, 21A: First clamp member
21B: Second clamp member, 21S: Color sensor
22: First conveying cylinder, 30: Raw material transport unit
31: Attachment pad, 32: Second conveying cylinder
33: Supplementary member, 34: Support member
41: Second roller, R: Roll type raw material
L: Start line (of roll type raw material), T: Tape
A: Bonding portion of tape, B: Non-bonding portion of tape (film coating portion)
F: Film, H1: Hole (of tape)
H2: Air eruption hole

## Claims

1. A roll type raw material supply device comprising:
a raw material mounting unit (10) for introducing a roll type raw material (R) to which a tape (T) for fixing to the end portion of the raw material is attached;
a tape removal unit (20) for clamping a non-bonding portion of the tape (B) and separating the tape (T) from the raw material;
the roll type raw material supply device being **characterized by** further comprising
a raw material conveying unit for attaching and moving the raw material.

2. The roll type raw material supply device of claim 1,
wherein the raw material mounting unit (10) comprises a support (11) and a first roller (12),
the support (11) supports the first roller (12), and
the first roller (12) fixes and rotates the roll type raw material (R).

3. The roll type raw material supply device of claim 1,
wherein the tape removal unit (20) comprises a clamp member (21) and a first conveying cylinder (22),
the clamp member (21) comprises a first clamp member (21A) and a second clamp member (21B),
the first clamp member (21A) is positioned at an outer side than the second clamp member (21B) to be in contact with the raw material and the tape (T) when driving the device, and
when the first clamp member (21A) and the second clamp member (21B) are spaced apart from each other and then the non-bonding portion of the tape (B) is positioned between the first clamp member (21A) and the second clamp member (21B), the first clamp member (21A) and the second clamp member (21B) are close to each other to clamp the non-bonding portion of the tape (B), and
the first conveying cylinder (22) moves the clamp member (21).

4. The roll type raw material supply device of claim 1,
wherein the raw material conveying unit comprises an attachment pad (31) and a second conveying cylinder (32),
the attachment pad (31) attaches and fixes the end portion of the raw material, and
the second conveying cylinder (32) moves the attachment pad (31).

5. The roll type raw material supply device of claim 3,
wherein the non-bonding portion of the tape (B) attached to the roll type raw material (R) has a different color from the raw material and is coated with a film (F) having greater rigidity than the tape (T), and
the first clamp member (21A) comprises a color sensor (21S) for identifying the film (F).

6. The roll type raw material supply device of claim 5,
wherein the first clamp member (21A) comprises an air eruption hole (H2) for erupting air in order to separate the non-bonding portion of the tape (B) from the roll type raw material (R).

7. The roll type raw material supply device of claim 6,
wherein a portion coated with the film (F) in the tape (T) has one or more holes (H1) through which air is capable of passing.

8. The roll type raw material supply device of claim 4,
wherein the attachment pad (31) has a shape in which an attachment surface is in contact with a corner of the end portion of the raw material but is not in contact with the tape (T) when attaching and fixing the end portion of the raw material.

9. The roll type raw material supply device of claim 8,
wherein the raw material conveying unit further comprises a supplementary member (33) for supplementing the attachment pad (31) so that the attachment surface is in contact with the entire area of the end portion of the raw material after the tape (T) is removed.

10. The roll type raw material supply device of claim 9,
wherein the raw material conveying unit further comprises a support member (34) for supporting the other surface of the attachment surface when unwinding the roll type raw material (R) after attaching the raw material.

11. The roll type raw material supply device of claim 4,
wherein the roll type raw material supply device further comprises one or more second rollers (41) for adjusting the tension of the raw material and determining a movement path of the raw material.

## Patentansprüche

1. Zufuhrvorrichtung für Rohmaterial vom Rollentyp, umfassend:
eine Rohmaterialmontageeinheit (10) zum Einführen eines Rohmaterials (R) vom Rollentyp, an dem ein Band (T) zum Befestigen an dem Endabschnitt des Rohmaterials angebracht ist;
eine Bandentfernungseinheit (20) zum Festklemmen eines nicht-bindenden Abschnitts des Bands (B) und zum Trennen des Bands (T) von dem Rohmaterial; wobei die Zufuhrvorrichtung für Rohmaterial vom Rollentyp **dadurch gekennzeichnet ist, dass** sie ferner umfasst
eine Rohmaterialfördereinheit zum Anbringen und Bewegen des Rohmaterials.

2. Zufuhrvorrichtung für Rohmaterial vom Rollentyp nach Anspruch 1, wobei die Rohmaterialmontageeinheit (10) einen Träger (11) und eine erste Rolle (12) umfasst,
der Träger (11) die erste Rolle (12) trägt, und
die erste Rolle (12) das Rohmaterial vom Rollentyp (R) fixiert und dreht.

3. Zufuhrvorrichtung für Rohmaterial vom Rollentyp nach Anspruch 1, wobei die Bandentfernungseinheit (20) ein Klemmelement (21) und einen ersten Förderzylinder (22) umfasst,
das Klemmelement (21) ein erstes Klemmelement (21A) und ein zweites Klemmelement (21B) umfasst,
das erste Klemmelement (21A) an einer anderen Außenseite als das zweite Klemmelement (21B) positioniert ist, um mit dem Rohmaterial und dem Band (T) in Kontakt zu sein, wenn die Vorrichtung angetrieben wird, und
wenn das erste Klemmelement (21A) und das zweite Klemmelement (21B) voneinander beabstandet sind und dann der nicht-bindende Abschnitt des Bands (B) zwischen dem ersten Klemmelement (21A) und dem zweiten Klemmelement (21B) positioniert ist, das erste Klemmelement (21A) und das zweite Klemmelement (21B) nahe beieinander sind, um den nicht-bindenden Abschnitt des Bands (B) festzuklemmen, und
der erste Förderzylinder (22) das Klemmelement (21) bewegt.

4. Zufuhrvorrichtung für Rohmaterial vom Rollentyp nach Anspruch 1, wobei die Rohmaterialfördereinheit ein Anbringungskissen (31) und einen zweiten Förderzylinder (32) umfasst,
das Anbringungskissen (31) den Endabschnitt des Rohmaterials anbringt und fixiert, und
der zweite Förderzylinder (32) das Anbringungskissen (31) bewegt.

5. Zufuhrvorrichtung für Rohmaterial vom Rollentyp nach Anspruch 3, wobei der nicht-bindende Abschnitt des Bands (B), der an dem Rohmaterial (R) vom Rollentyp angebracht ist, eine andere Farbe als das Rohmaterial aufweist und mit einem Film (F) beschichtet ist, der eine größere Steifigkeit als das Band (T) aufweist, und
das erste Klemmelement (21A) einen Farbsensor (21S) zum Identifizieren des Films (F) umfasst.

6. Zufuhrvorrichtung für Rohmaterial vom Rollentyp nach Anspruch 5, wobei das erste Klemmelement (21A) ein Luftausbrechloch (H2) zum Ausbrechen von Luft umfasst, um den nicht-bindenden Abschnitt des Bands (B) von dem Rohmaterial (R) vom Rollentyp zu trennen.

7. Zufuhrvorrichtung für Rohmaterial vom Rollentyp nach Anspruch 6, wobei ein Abschnitt, der mit dem Film (F) in dem Band (T) beschichtet ist, ein oder mehrere Löcher (H1) aufweist, durch die Luft hindurchtreten kann.

8. Zufuhrvorrichtung für Rohmaterial vom Rollentyp nach Anspruch 4, wobei das Anbringungskissen (31) eine Form aufweist, in der eine Anbringungsfläche mit einer Ecke des Endabschnitts des Rohmaterials in Kontakt ist, aber nicht mit dem Band (T) in Kontakt ist, wenn der Endabschnitt des Rohmaterials angebracht und fixiert wird.

9. Zufuhrvorrichtung für Rohmaterial vom Rollentyp nach Anspruch 8, wobei die Rohmaterialfördereinheit ferner ein Ergänzungselement (33) zum Ergänzen des Anbringungskissens (31) umfasst, so dass die Anbringungsfläche mit dem gesamten Bereich des Endabschnitts des Rohmaterials in Kontakt ist, nachdem das Band (T) entfernt wurde.

10. Zufuhrvorrichtung für Rohmaterial vom Rollentyp nach Anspruch 9, wobei die Rohmaterialfördereinheit ferner ein Trägerelement (34) zum Tragen der anderen Fläche der Anbringungsfläche umfasst, wenn das Rohmaterial vom Rollentyp (R) nach dem Anbringen des Rohmaterials abgewickelt wird.

11. Zufuhrvorrichtung für Rohmaterial vom Rollentyp nach Anspruch 4, wobei die Zufuhrvorrichtung für Rohmaterial vom Rollentyp ferner eine oder mehrere zweite Rollen (41) zum Einstellen der Spannung des Rohmaterials und zum Bestimmen eines Bewegungswegs des Rohmaterials umfasst.

## Revendications

1. Dispositif d'alimentation en matière première de type rouleau comprenant :
une unité de montage de matière première (10) qui introduit une matière première de type rouleau (R) à laquelle une bande (T) se fixant à la partie d'extrémité de la matière première est assujettie ;
une unité de retrait de bande (20) qui serre une partie non liante de la bande (B) et sépare la bande (T) de la matière première ; le dispositif d'alimentation en matière première de type rouleau étant **caractérisé en ce qu'**il comprend en outre
une unité de transport de matière première qui assujettit et déplace la matière première.

2. Dispositif d'alimentation en matière première de type rouleau selon la revendication 1,
dans lequel l'unité de montage de matière première (10) comprend un support (11) et un premier rouleau (12),
le support (11) soutient le premier rouleau (12), et
le premier rouleau (12) fixe et fait tourner la matière première de type rouleau (R).

3. Dispositif d'alimentation en matière première de type rouleau selon la revendication 1, dans lequel l'unité de retrait de bande (20) comprend un élément de serrage (21) et un premier cylindre de transport (22),
l'élément de serrage (21) comprend un premier élément de serrage (21A) et un deuxième élément de serrage (21B),
le premier élément de serrage (21A) est positionné d'un côté plus extérieur que le deuxième élément de serrage (21B) pour être en contact avec la matière première et la bande (T) quand le dispositif fonctionne, et
quand le premier élément de serrage (21A) et le deuxième élément de serrage (21B) sont à distance l'un de l'autre et qu'alors la partie non liante de la bande (B) est positionnée entre le premier élément de serrage (21A) et le deuxième élément de serrage (21B), le premier élément de serrage (21A) et le deuxième élément de serrage (21B) sont proches l'un de l'autre pour serrer la partie non liante de la bande (B), et
le premier cylindre de transport (22) déplace l'élément de serrage (21).

4. Dispositif d'alimentation en matière première de type rouleau selon la revendication 1, dans lequel une unité de transport de matière première comprend un patin de fixation (31) et un deuxième cylindre de transport (32),
le patin de fixation (31) assujettit et fixe la partie d'extrémité de la matière première, et
le deuxième cylindre de transport (32) déplace le patin de fixation (31).

5. Dispositif d'alimentation en matière première de type rouleau selon la revendication 3, dans lequel la partie non liante de la bande (B) assujettie à la matière première de type rouleau (R) a une couleur différente de la matière première et est revêtue d'un film (F) ayant une plus grande rigidité que la bande (T), et
le premier élément de serrage (21A) comprend un capteur de couleur (21S) qui identifie le film (F).

6. Dispositif d'alimentation en matière première de type rouleau selon la revendication 5,
dans lequel le premier élément de serrage (21A) comprend un trou d'éruption d'air (H2) pour l'explosion de l'air afin de séparer la partie non liante de la bande (B) de la matière première de type rouleau (R).

7. Dispositif d'alimentation en matière première de type rouleau selon la revendication 6,
dans lequel une partie revêtue du film (F) dans la bande (T) a un ou plusieurs trous (H1) à travers lesquels l'air est capable de passer.

8. Dispositif d'alimentation en matière première de type rouleau selon la revendication 4, dans lequel le patin de fixation (31) a une forme dans laquelle une surface de fixation est en contact avec un coin de la partie d'extrémité de la matière première mais n'est pas en contact avec la bande (T) lors de l'assujettissement et de la fixation de la partie d'extrémité de la matière première.

9. Dispositif d'alimentation en matière première de type rouleau selon la revendication 8,
dans lequel l'unité de transport de matière première comprend en outre un élément complémentaire (33) pour compléter le patin de fixation (31) de telle sorte que la surface de fixation est en contact avec la totalité de la zone de la partie d'extrémité de la matière première après que la bande (T) est retirée.

10. Dispositif d'alimentation en matière première de type rouleau selon la revendication 9,
dans lequel la première unité de transport de matière première comprend en outre un élément de support (34) qui soutient l'autre surface de la surface de fixation lors du déroulement de la matière première de type rouleau (R) après l'assujettissement de la matière première.

11. Dispositif d'alimentation en matière première de type rouleau selon la revendication 4,
dans lequel le dispositif d'alimentation en matière première de type rouleau comprend en outre un ou plusieurs deuxièmes rouleaux (41) pour ajuster la tension de la matière première et déterminer un trajet de déplacement de la matière première.
